(19) **Europäisches Patentamt**

**European Patent Office**

**Office européen des brevets**

(11) Veröffentlichungsnummer: **0 519 107 A1**

(12) ## EUROPÄISCHE PATENTANMELDUNG

(21) Anmeldenummer: **91110183.0**

(22) Anmeldetag: **20.06.91**

(51) Int. Cl.⁵: **B23Q 1/02**

(43) Veröffentlichungstag der Anmeldung:
**23.12.92 Patentblatt 92/52**

(84) Benannte Vertragsstaaten:
**AT CH DE FR GB IT LI**

(71) Anmelder: **SIEMENS AKTIENGESELLSCHAFT**
**Wittelsbacherplatz 2**
**W-8000 München 2(DE)**

(72) Erfinder: **Melf, Johann**
**Dorfstrasse 29**
**W-8193 Degerndorf(DE)**

(54) **Linearführung.**

(57) Linearführungen (Lf) mit mindestens einem Linearlager (L) und einem in dem Linearlager (L) in Längsrichtung (Lr) verschiebbar gelagerten beweglichen Bauteil (B) sollen so ausgebildet werden, daß hohe Beschleunigungen bei möglichst geringer Antriebs- bzw. Bremsleistung realisiert werden können. Dieses Ziel wird durch aus Oxidkeramik, vorzugsweise aus Zirkoniumdioxid bestehende bewegliche Bauteile (B) erreicht, die gegenüber beweglichen Bauteilen aus Stahl ein wesentlich geringeres Gewicht bei gleichbleibender Steifigkeit aufweisen. Linearführungen (Lf) mit vorzugsweise als Hohlwellen ausgebildeten und aus Oxidkeramik bestehenden, massearmen beweglichen Bauteilen (B) können für Schlitten, für Kreuzschlitten oder auch als Saugpipettten für SMD-Bestückautomaten verwendet werden.

Fig.1

EP 0 519 107 A1

Linearführungen mit ortsfest angeordneten Linearlagern ermöglichen hin- und hergehende Linearbewegungen der in den Linearlagern angeordneten beweglichen Bauteile. Für eine Linearführung werden meist zwei im Abstand zueinander angeordnete Linearlager verwendet, die als Linear-Kugellager oder als Linear-Gleitlager ausgebildet sein können. Als bewegliche Bauteile werden in der Regel gehärtete oder hartverchromte Stahlwellen verwendet, die dann häufig neben den hin- und hergehenden Linearbewegungen zusätzlich auch noch Drehbewegungen ausführen können. Sollen für die beweglichen Bauteile hohe Beschleunigungen mit möglichst geringen Antriebs- bzw. Bremsleistungen erreicht werden, so werden zur Reduzierung der bewegten Masse gehärtete oder hartverchromte Stahlhohlwellen eingesetzt.

Der im Anspruch 1 angegebenen Erfindung liegt das Problem zugrunde, bei Linearführungen mit mindestens einem Linearlager und einem in dem Linearlager in Längsrichtung verschiebbar gelagerten beweglichen Bauteil die Masse des beweglichen Bauteils ohne Beeinträchtigung der mechanischen Eigenschaften weiter zu reduzieren.

Durch die Wahl von Oxidkeramik als Werkstoff für das bewegliche Bauteil einer Linearführung kann durch die geringe Dichte dieses Werkstoffes das Gewicht des beweglichen Bauteils erheblich reduziert werden, während der Wärmeausdehnungskoeffizient und der Elastizitätsmodul mit den korrespondierenden Werten von Stahl vergleichbar sind und die Härte und Verschleißbeständigkeit gegenüber gehärteten oder hartverchromtem Stahl sogar noch gesteigert wird. Bei der Wahl von Oxidkeramik als Werkstoff für das bewegliche Bauteil sind in erster Linie die geringe Dichte und die mechanischen Eigenschaften von Bedeutung, wobei die Vorteile gegenüber Stahl auch bei Zusätzen von Stabilisatoren oder anderen Stoffen zur Oxidkeramik oder bei der mechanischen Verbindung der Oxidkeramik mit relativ leichten Bauteilen aus anderen Materialien zum Tragen kommen. Im Hinblick auf die Masse und die mechanischen Eigenschaften des beweglichen Bauteils sollte die Oxidkeramik jedoch stets einen überragenden Einfluß ausüben.

Vorteilhafte Ausgestaltungen der Erfindung sind in den Ansprüchen 2 bis 5 angegeben.

Gemäß Anspruch 2 wird aus der Gruppe der Oxidkeramik vorzugsweise Zirkoniumdioxid als Werkstoff für das bewegliche Bauteil gewählt, da der Wärmeausdehnungskoeffizient und der Elastizitätsmodul bei Zirkoniumdioxid besonders dicht bei den entsprechenden Werten von Stahl liegen und somit beispielsweise bei Paarungen mit Linear-Kugellagern aus Stahl keinerlei Probleme auftreten. Als weitere hervorragende Eigenschaften von Zirkoniumdioxid sind die hohe Verschleißbeständigkeit, die hohe Härte, die extrem glatten Oberflächen und die niedrigen Reibwerte gegenüber Metall zu nennen.

Die Weiterbildungen gemäß den Ansprüchen 3 und 4 betreffen die Ausbildung des beweglichen Bauteils als Welle bzw. Hohlwelle, wobei im Hinblick auf die erwünschte Reduzierung der Masse natürlich die Ausbildung als Hohlwelle hervorzuheben ist. Gemäß Anspruch 5 können dann Welle bzw. Hohlwelle in dem Linearlager zusätzlich auch noch drehbar gelagert sein.

Gemäß den Ansprüchen 6 bis 8 kommen die Vorteile der Erfindung insbesondere bei der Verwendung der Linearführungen für Schlitten, für Kreuzschlitten und als Saugpipette eines SMD-Bestückautomaten zum Tragen.

Ausführungsbeispiele der Erfindung sind in der Zeichnung dargestellt und werden im folgenden näher beschrieben.

Es zeigen:

Figur 1    eine aus Hohlwelle und zwei Linearlagern bestehende Linearführung,

Figur 2    die Verwendung von insgesamt 4 erfindungsgemäßen Linearführungen in einem Kreuztisch und

Figur 3    die Verwendung einer erfindungsgemäßen Linearführung als Saugpipette eines SMD-Bestückautomaten.

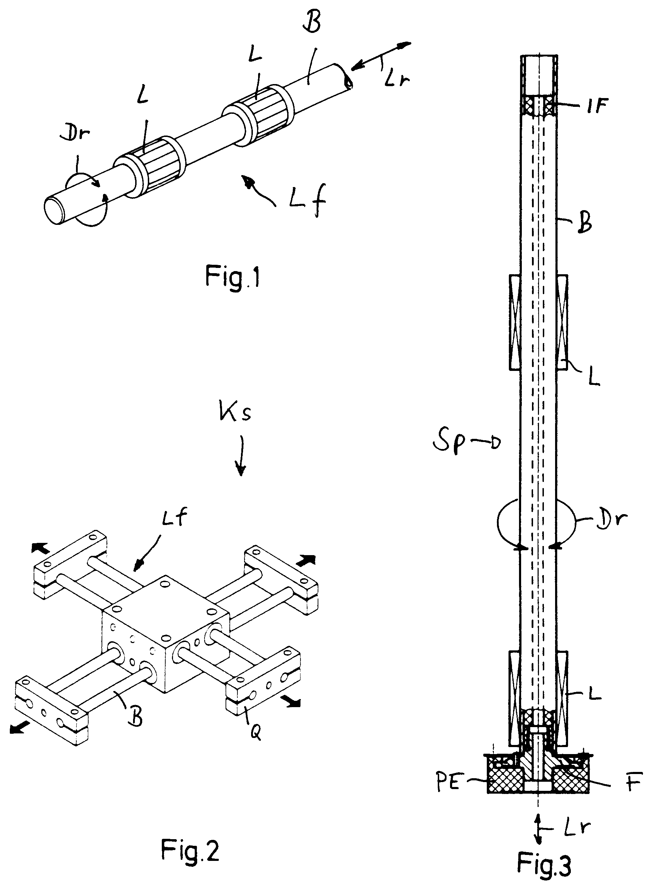

Figur 1 zeigt eine Linearführung Lf mit zwei im Abstand zueinander angeordneten Linearlagern L und einem als Hohlwelle ausgebildeten beweglichen Bauteil B in von der Form her handelsüblicher Ausführung. Bei den beiden Linearlagern L handelt es sich um Linear-Kugellager, bei denen die Kugeln durch geschlossene Umlaufbahnen in einem stetigen Kreislauf in die Lastzone zurückgeführt werden. Die beiden Linearlager L ermöglichen eine hin- und hergehende Linearbewegung des beweglichen Bauteils B in Längsrichtung Lr, wobei gleichzeitig oder getrennt auch Drehungen Dr des beweglichen Bauteils B möglich sind.

Damit das als Hohlwelle ausgebildete bewegliche Bauteil B hohe Beschleunigungen in Längsrichtung Lr mit möglichst geringer Antriebs- bzw. Bremsleistung ausführen kann, wird es aus Zirkoniumdioxid ($ZrO_2$) gefertigt. Die Fertigung von Hohlwellen aus Zirkoniumdioxid mit einem Magnesiumoxidgehalt von 4 %, einer Dichte von 5,5 g/cm$^3$, einem Längenausdehnungskoeffizienten im Bereich zwischen 20 und 1000° C von 8,5 . 10$^{-6}$ I/K und einer Biegefestigkeit von 400 N/mm$^2$ kann beispielsweise von der Firma

Rauschert GmbH & Co. KG
Postfach 1120
D-8644 Pressig

übernommen werden. Die Wandstärken derartiger Hohlwellen betragen beispielsweise 1,5 mm, wobei jedoch auch Wandstärken von 1 mm realisiert werden können. Gegenüber Hohlwellen aus Stahl wird durch die Verwendung von Zirkoniumdioxid das Gewicht bei gleichbleibender Steifigkeit um etwa 30 % reduziert.

Figur 2 zeigt einen Kreuzschlitten Ks in von der Form her handelsüblicher Ausgestaltung. Bei diesem Kreuzschlitten Ks werden insgesamt vier der in Fig. 1 dargestellten Linearführungen Lf verwendet, d. h. die vier als Hohlwellen ausgebildeten beweglichen Bauteile B bestehen wieder aus Zirkoniumdioxid. Die Querteile Q, die jeweils die stirnseitigen Enden von zwei parallelen beweglichen Bauteilen B miteinander verbinden, können ebenfalls aus Zirkoniumdioxid gefertigt werden.

Fig. 3 zeigt die Verwendung einer Linearführung Lf gemäß Fig. 1 als Saugpipette Sp eines SMD-Bestückautomaten. Nähere Einzelheiten über die Wirkungsweise derartiger Saugpipetten bei der automatischen Bestückung von Leiterplatten oder Keramiksubstraten gehen beispielsweise aus der US-PS 4 135 630 hervor.

Die über die beiden Linearlager L im nicht näher dargestellten Bestückkopf eines SMD-Bestückautomaten in Längsrichtung Lr verschiebbar gelagerte Saugpipette Sp kann auch eine Drehbewegung Dr ausführen, um die jeweils aufgenommenen SMD-Bauelemente in die richtige Einbaulage zu drehen. In das untere Ende des als Rohr bzw. Hohlwelle ausgebildeten beweglichen Bauteils B ist ein Flansch F eingeklebt, welcher seinerzeit einen Pipetten-Einsatz PE aus elastischem Material trägt.

Zur Erzielung eines möglichst geringen Gewichts des beweglichen Bauteils B bei hoher Steifigkeit wird es wieder aus Zirkoniumdioxid mit einer Wandstärke von 1 bis 1,5 mm gefertigt. Andererseits soll jedoch das Volumen im Innern der Saugpipette möglichst gering sein, um beim Anlegen eines Vakuums am oberen Ende ein einwandfreies Ansaugen von SMD-Bauelementen mit dem Pipetten-Einsatz PE am unteren Ende zu gewährleisten. Dieses geringe Volumen wird im dargestellten Ausführungsbeispiel durch eine rohrförmige Innen-Füllung IF der Saugpipette Sp erzielt, die aus einem geschäumten Kunststoff besteht und damit das Gewicht des beweglichen Bauteils B nur unwesentlich erhöht. Somit können für die dargestellte Saugpipette Sp bei äußerst geringer Antriebs- bzw. Bremsleistung sehr hohe Beschleunigungen in Längsrichtung Lr und somit auch sehr hohe Bestückleistungen erreicht werden.

Obwohl als Werkstoff für das bewegliche Bauteil B Zirkoniumdioxid bevorzugt wird, können auch andere zur Gruppe der Oxidkeramik gehörende Werkstoffe verwendet werden. Zu nennen sind hier Aluminiumoxid, Magnesiumoxid, Berylliumoxid und Thoriumoxid, wobei auch Mischungen dieser Stoffe untereinander oder mit Zirkoniumdioxid möglich sind.

**Patentansprüche**

1. Linearführung mit mindestens einem ortsfesten Linearlager (L) und einem in dem Linearlager (L) in Längsrichtung (Lr) verschiebbar gelagerten beweglichen Bauteil (B),
**dadurch gekennzeichnet,**
daß das bewegliche Bauteil (B) zumindest weitgehend aus Oxidkeramik besteht.

2. Linearführung nach Anspruch 1,
**dadurch gekennzeichnet,**
daß das bewegliche Bauteil (B) zumindest weitgehend aus Zirkoniumdioxid besteht.

3. Linearführung nach Anspruch 1 oder 2,
**dadurch gekennzeichnet,**
daß das bewegliche Bauteil (B) als Welle ausgebildet ist.

4. Linearführung nach Anspruch 3,
**dadurch gekennzeichnet,**
daß das bewegliche Bauteil (B) als Hohlwelle ausgebildet ist.

5. Linearführung nach Anspruch 3 oder 4,
**dadurch gekennzeichnet,**
daß das bewegliche Bauteil (B) in dem Linearlager (L) zusätzlich auch drehbar gelagert ist.

6. Verwendung mindestens einer Linearführung nach einem der Ansprüche 1 bis 5 für einen Schlitten.

7. Verwendung mindestens zweiter Linearführungen nach einem der Ansprüche 1 bis 5 für einen Kreuzschlitten (Ks).

8. Verwendung einer Linearführung nach Anspruch 4 oder 5 als Saugpipette (Sp) eines SMD-Bestückautomaten.

Fig.1

Ks

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | MACHINES PRODUCTION. Bd. 479, Nr. 1, 26. Januar 1988, BOULOGNE/SEINE FR Seiten 25 - 35; 'Materiaux structurels: l'avancée irréversible des céramiques' | 1,3,4,6, 7 | B23Q1/02 |
| Y | * Seite 25, rechte Spalte, Absatz 1 * * Seite 27, linke Spalte, Absatz 2 * * Seite 29, mittlere Spalte, Absatz 1 * * Seite 33, mittlere Spalte, Absatz 1 * --- | 2,5,8 | |
| Y | KONSTRUKTION. Bd. 39, Nr. 2, Februar 1987, BERLIN DE Seiten 41 - 44; G. SPUR , E. HOFFMANN &   Z. PALUNCIC: 'Schleifspindeleinheit mit Keramikspindel' * Tabelle 1 * --- | 2 | |
| Y | DE-A-3 518 607 (DECKEL) * Anspruch 2; Abbildung 2 * --- | 5 | |
| D | US-A-4 135 630 (SNYDER) | | **RECHERCHIERTE SACHGEBIETE (Int. Cl.5 )** |
| Y | * Spalte 6, Absatz 6 * | 8 | |
| | ----- | | B23Q |

Der vorliegende Recherchenbericht wurde für alle Patentansprüche erstellt

| Recherchenort | Abschlußdatum der Recherche | Prüfer |
|---|---|---|
| DEN HAAG | 02 DEZEMBER 1991 | DE GUSSEM J.L. |